Europäisches Patentamt

European Patent Office

Office européen des brevets

(11) Numéro de publication: **0 127 553 B1**

(12) **FASCICULE DE BREVET EUROPEEN**

(45) Date de publication de fascicule du brevet:
**12.02.92**

(21) Numéro de dépôt: **84420083.2**

(22) Date de dépôt: **04.05.84**

(51) Int. Cl.⁵: **B29C 67/12**, B62K 19/16

(54) Matériau tubulaire à base d'une résine renforcée par une matière textile et cadre de bicyclette ou véhicule similaire réalisé à partir d'un tel matériau.

(30) Priorité: **24.05.83 FR 8308764**

(43) Date de publication de la demande:
**05.12.84 Bulletin 84/49**

(45) Mention de la délivrance du brevet:
**12.02.92 Bulletin 92/07**

(84) Etats contractants désignés:
**DE FR GB IT NL**

(56) Documents cités:
**CH-A- 464 505**      **DE-A- 1 784 614**
**FR-A- 2 348 393**      **FR-A- 2 455 980**
**FR-A- 2 464 876**      **FR-A- 2 501 579**
**FR-A- 2 537 171**      **GB-A- 2 017 260**
**US-A- 2 747 616**      **US-A- 3 281 299**
**US-A- 4 047 731**

(73) Titulaire: **T.V.T. COMPOSITES**
**3, rue Keppler**
**F-75116 Paris(FR)**

(72) Inventeur: **Foret, Régis**
**Le Gourd**
**F-69290 Brindas(FR)**

(74) Mandataire: **Laurent, Michel et al**
**Cabinet LAURENT et CHARRAS, 20, rue Louis**
**Chirpaz B.P. 32**
**F-69131 Ecully Cedex(FR)**

Rank Xerox (UK) Business Services

## Description

La présente invention concerne un perfectionnement apporté à la réalisation des cadres de bicyclettes ou véhicules similaires. Elle a trait plus particulièrement à un nouveau type de matériau tubulaire à base d'une résine renforcée par une armature textile susceptible d'être utilisée pour l'obtention de tels cadres.

Les cadres de bicyclettes sont, d'une manière générale, constitués d'éléments tubulaires reliés les uns aux autres selon une configuration bien précise qui, en combinaison avec la nature du matériau utilisé, doit permettre d'obtenir des caractéristiques en elle-même contradictoire à savoir la plus grande légèreté possible, une excellente rigidité tout en présentant cependant une certaine nervosité, c'est-à-dire de pouvoir absorber rapidement les déformations temporaires auxquelles ledit cadre est soumis sous l'action des contraintes qu'il subit.

A ce jour, les cadres de bicyclettes sont principalement réalisés en tubes métalliques, acier par exemple. De tels cadres sont en général lourds, et résistent mal aux agents extérieurs (phénomène de rouille).

Pour surmonter ces inconvénients, il a été proposé d'utiliser des alliages spéciaux qui, cependant, présentent l'inconvénient d'être très coûteux.

Il a également été proposé de réaliser de tels cadres par moulage d'une matière thermoplastique, ce qui résoud certes les problèmes de rouille et de prix de revient, mais conduit à un ensemble lourd et qui manque de rigidité.

On connait par ailleurs des structures tubulaires stratifiées, c'est-à-dire constituées de gaines textiles superposées et imprégnées par une résine appropriée qui, après traitement notamment de polymérisation, permet de lier les différentes couches entre elles et d'obtenir un ensemble rigide et résistant.

De telles structures tubulaires sont décrites notamment dans les demandes de brevet français n° 79/12 533, 81/05 261 et 82/ 20 436 au nom du Demandeur.

De telles structures utilisées notamment pour la réalisation de mâts de voiliers, comportent comme matériau textile de renforcement des articles tressés fabriqués par exemple à partir de fils de verre, de silice, de carbone, de fibres chimiques diverses telles que celles commercialisées sous la marque KEVLAR.

Différents types de tresses ont été proposés à ce jour en fonction des caractéristiques mécaniques que l'on souhaite obtenir dans le tube stratifié final. Ainsi, il a été proposé d'utiliser des tresses dites "bidirectionnelles", c'est-à-dire des tresses constituées de deux séries de fils entrecroisés, de préférence identiques, et disposées suivant un ordre déterminé par rapport à la génératrice de la gaine que forme cette tresse, l'inclinaison du fil les uns par rapport aux autres étant en général, avant réalisation du stratifié proprement dit, voisine de 45°.

Une telle tresse présente comme caractéristique de pouvoir se déformer aussi bien dans son sens longitudinal que dans le sens latéral et par suite, de pouvoir prendre facilement une forme autre que cylindrique.

Par ailleurs, pour certaines applications, notamment lorsque l'on désire améliorer essentiellement la résistance à la flexion et non pas celle de la torsion, il a été proposé d'utiliser comme élément textile de renforcement des gaines dites "unidirectionnelles", c'est-à-dire des gaines constituées essentiellement de fils longitudinaux, parallèles entre eux. De préférence, le maintien et le positionnement de ces fils longitudinaux est obtenu au moyen de fils tressés très fins par rapport auxdits fils longitudinaux, ces fils tressés ne constituant qu'une partie minoritaire de l'ensemble. En général, les fils de liage sont constitués par des fils de verre, matière couramment utilisée pour la réalisation des matériaux stratifiés. De telles gaines unidirectionnelles présentent comme inconvénient majeur de n'être que faiblement déformable dans le sens radial, ce qui les rend difficilement utilisables lors de la réalisation d'éléments tubulaires coniques.

Il aurait pû être envisagé d'utiliser de tels matériaux tubulaires stratifiés pour la réalisation de cadres de bicyclettes mais, pour cette application, il semblait difficile de pouvoir concilier à la fois les problèmes de légèreté et de résistance aux chocs, notamment de résistance à l'éclatement que doit présenter un tel cadre. En effet, s'il pouvait être envisagé de réaliser des articles tubulaires stratifiés comportant des tresses à base de fibres de carbone, articles qui présentent l'avantage d'être très légers, il a été constaté que le cadre ainsi réalisé présentait un manque de résistance à la torsion et, qu'en outre et surtout, en cas de choc frontal, il y avait un risque d'éclatement dangereux pour l'utilisateur.

Or on a trouvé, et c'est ce qui fait l'objet de la présente invention, qu'il était possible de réaliser un cadre de bicyclette remplissant simultanément les conditions de légèreté, résistance, flexibilité exigées pour de tels articles et ce, à partir de matériaux stratifiés tubulaires renforcés par une armature textile tressée à la condition cependant, que les tresses entrant dans la constitution dudit matériau aient une structure déterminée et soient superposées, de l'intérieur à l'extérieur dudit élément tubulaire, d'une manière bien précise.

D'une manière générale, le nouveau matériau tubulaire permettant l'obtention d'un cadre conforme à l'invention est du type constitué d'une pluralité de couches textiles superposées, la couche interne et la couche externe étant constituées par des gaines tressées bidirectionnelles, ces deux couches emprisonnant au moins une couche de fils longitudinaux, ledit matériau étant caractérisé par le fait :

- que la couche interne et la couche externe sont constituées de tresses bidirectionnelles à base de fibres présentant une grande résistance mécanique telles que des fibres de verre, de carbone, de bore ;
- que la couche centrale unidirectionelle est constituée par au moins une nappe de fils longitudinaux, parallèles, comprenant au moins 10% de fils présentant une grande résistance à la traction, tels que par exemple des fils commercialisés sous la marque KEVLAR, fils présentant un haut module d'élasticité, les autres fils longitudinaux étant des fils de même nature que les fils constituant les tresses bidirectionnelles des couches interne et externe.

De préférence, selon une forme de mise en oeuvre de l'invention, les fils longitudinaux de la couche centrale sont liés entre eux au moyen d'une tresse à base de fils fins par rapport auxdits fils longitudinaux, cette tresse ne constituant qu'une partie minoritaire de l'ensemble.

Par ailleurs, selon une forme préférentielle de mise en oeuvre de l'invention, la couche externe est recouverte d'une tresse bidirectionnelle additionnelle à base de fils de verre servant de couche de surfaçage.

Si éventuellement, les couches interne et externe peuvent être constituées d'une seule tresse bidirectionnelle dans un mode préférentiel de mise en oeuvre de l'invention, lesdites couches interne et externe seront formées par une superposition de plusieurs tresses bidirectionnelles, à base de fils de même nature, l'inclinaison desdits fils variant d'une tresse élémentaire à l'autre, cette inclinaison étant en général comprise entre 30 et 55°. Dans un mode de mise en oeuvre de l'invention, la couche interne bidirectionnelle est constituée de deux tresses élémentaires bidirectionnelles superposées, alors que la couche externe est, quant à elle, constituée de trois tresses élémentaires superposées.

Grâce à un tel matériau, il est possible de réaliser des cadres de bicyclettes qui non seulement présentent une grande légèreté, une excellente rigidité et nervosité mais qui, par ailleurs, éliminent tout risque d'éclatement. En effet, on a constaté que s'il était éventuellement possible de casser un tel tube en revanche, les éléments ainsi brisés restaient reliés les uns aux autres et ce, grâce à la structure particulière et au positionnement dans ledit tube de la tresse unidirectionnelle qu'il comporte.

Par ailleurs, grâce à un tel matériau, il est possible non seulement de réaliser des cadres de section circulaires mais on peut également leur donner une forme profilée ainsi qu'éventuellement, notamment en appliquant les enseignements de la demande de brevet français 82/20 436, une forme conique, notamment pour la réalisation des haubans et des embases que comporte un tel cadre.

L'invention et les avantages qu'elle apporte seront cependant mieux compris grâce à l'exemple de réalisation donné ci-après à titre indicatif mais non limitatif, et qui est illustré par les schémas annexés dans lesquels :

- la figure 1 illustre un cadre de vélo réalisé à partir d'un matériau tubulaire conforme à l'invention,
- la figure 2 est une vue éclatée, en perspective, montrant de manière schématique la constitution d'un tel matériau,
- les figures 3 et 4 sont des vues schématiques, également en perspective, illustrant la structure des tresses bidirectionnelles et unidirectionnelles entrant dans la composition d'un tel matériau tubulaire.

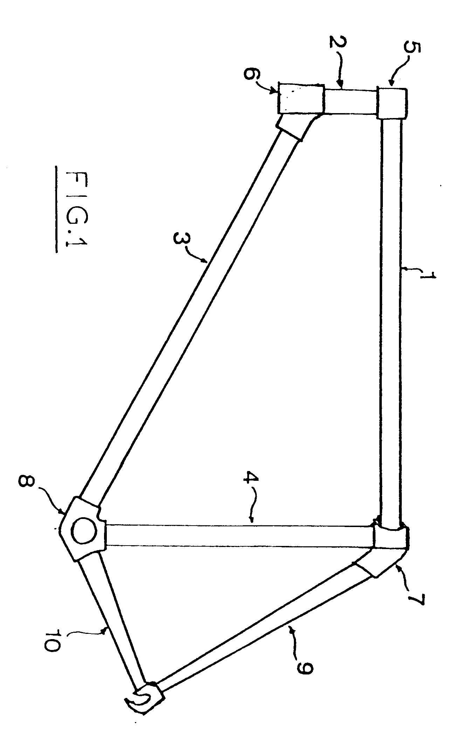

On réalise un cadre pour vélo du type illustré à la figure 1, c'est-à-dire comportant un tube horizontal (1), une douille de direction (2), un tube diagonal (3) et un tube de selle (4), ces tubes étant reliés entre eux par des manchons de liaison (5,6,7,8). Par mesure de simplification, la fourche, le guidon, la selle et le pédalier n'ont pas été représentés à la figure 1. Les éléments de liaison (7-8) supportent également des éléments tubulaires (9-10) constituant respectivement les haubans et les embases pour le maintien de la roue arrière.

Pour la réalisation d'un tel cadre, on utilise d'une part des éléments tubulaires cylindriques pour les tubes (1,2,3,4) et, d'autre part, des éléments tubulaires coniques pour la réalisation des haubans (9) et des embases (10).

La structure de ces éléments tubulaires est la suivante :

Eléments tubulaires (1,2,3,4)

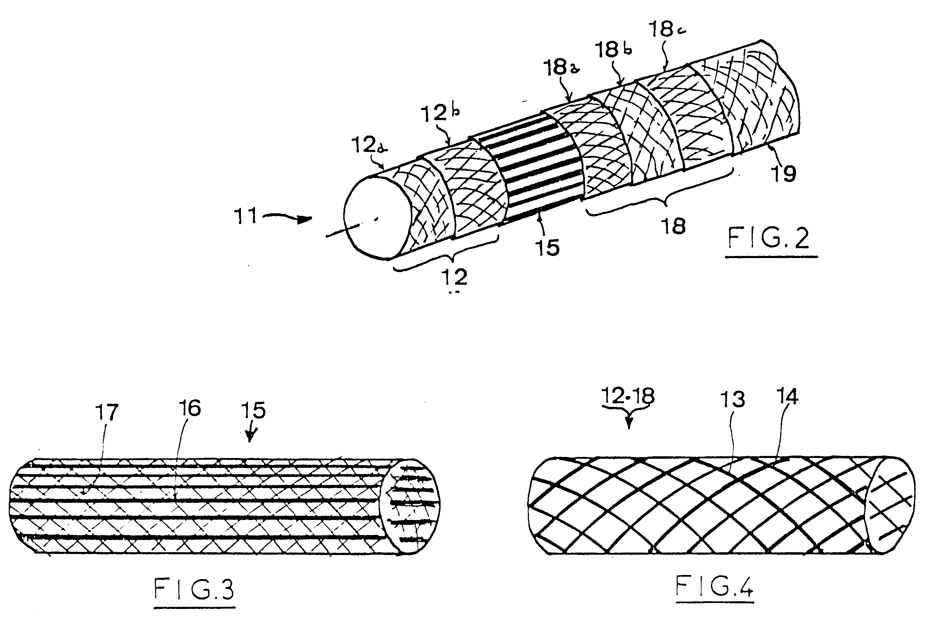

Ces éléments sont réalisés à partir d'un tube stratifié tel que schématisé à la figure 2, d'une manière similaire à celle décrite dans la demande de brevet français n° 81/05 261. Par suite, le processus de fabrication d'un tel tube ne sera pas décrit par mesure de simplification.

Un tel matériau désigné par la référence générale (11) est constitué essentiellement par une résine polymérisable renforcée par une armature textile. Cette armature textile comporte, conformément à l'invention, en allant vers l'intérieur vers l'extérieur :

- une couche interne (12), constituée dans le cas présent de deux gaines tressées bidirectionnelles (12a) (12b) superposées, ayant une structure telle que schématisée à la figure 4 et qui sont constituées de deux séries de fils (13-14) ; les fils (13-14) sont entrecroisés à 45° pour l'une des tresses et à 30° pour l'autre ; chaque serie de fils comporte 48 fils de carbone ayant chacun un titre global de 198 Tex; à la sortie de la tresseuse, la tresse (12) a un diamètre nominal de 27mm ;

- une couche intermédiaire (15), du type illustré à la figure 3, et constituée dans le cas présent de fils parallèles (16) liés entre eux par des fils de liage (17), très fins par rapport aux fils longitudinaux (16) et qui ne constituent qu'une partie minoritaire de l'ensemble ; conformément à l'invention, les fils longitudinaux (16) sont constitués de deux types de matière, d'une part de fils de carbone similaires à ceux utilisés pour la couche interne (12) et, d'autre part, de fils à haut module d'élasticité du type de ceux commercialisés sous la marque KEVLAR ; les fils de KEVLAR représentent 10 % du poids total de cette tresse (15) ; dans le cas présent, on utilise 264 fils longitudinaux et ce, à raison de 240 fils de carbone ayant un titre de 198 Tex pour 24 fils de KEVLAR ayant un titre de 126 Tex ;

- une couche externe (18) constituée de trois tresses bidirectionnelles superposées (18a, 18b, 18c), l'inclinaison des fils variant d'une tresse à l'autre étant respectivement de 30, 45 et 55° pour chacune des tresses ; ces tresses sont également à base de fils de carbone similaires à ceux des tresses (12) ;

- une couche de surfaçage (19) constituée, comme pour les couches interne et externe (12) et (18) d'une tresse bidirectionnelle mais qui, contrairement à ces couches, est à base de fils de verre ayant, dans le cas présent, un titre de 136 Tex.

Pour les éléments tubulaires constituant les haubans (9) et les embases (10) :

On utilise une structure tubulaire stratifiée comparable à celle décrite précédemment à la seule différence que la tresse unidirectionnelle intermédiaire (15) est liée au moyen de fils extensibles d'une manière similaire à l'article décrit dans la demande de brevet français n° 82/20 436 du Demandeur, ce qui permet de donner une configuration conique à ces éléments. Par rapport à un cadre de vélo similaire réalisé en métal léger, par exemple en Duraluminium, on obtient grâce au matériau conforme à l'invention, un gain de poids de 20 %. De plus, les caractéristiques mécaniques (résistance, nervosité) sont nettement supérieures.

Enfin, par rapport à un cadre similaire mais qui serait réalisé en utilisant comme matière textile de renforcement uniquement des fibres de carbone, fibres qui sont réputées pour obtenir des articles d'une grande résistance et d'une grandes légèreté, on obtient un cadre d'un poids pratiquement équivalent qui présente une très bonne nervosité et élimine tout risque d'éclatement susceptible de se produire sous l'effet d'un choc violent.

Si l'invention a été décrite plus particulièrement pour la réalisation d'un cadre de vélo, il est évident que cela n'est pas limitatif et que le matériau tubulaire conforme à l'invention pourrait également être utilisé dans des applications similaires, par exemple pour la réalisation de cadres de motos.

Bien entendu, l'invention n'est pas limitée à l'exemple de réalisation décrit précédemment, mais elle en couvre toutes les variantes réalisées dans le même esprit. Ainsi, il pourrait être envisagé de modifier le nombre de tresses bidirectionnelles élémentaires entrant dans la constitution des couches interne et externe, voire même de n'utiliser qu'une seule tresse pour former chaque couche interne et externe. Ainsi, comme dit précédemment, si les fils longitudinaux de la couche interne sont de préférence liés entre eux par l'intermédiaire d'une tresse à base de fils très fins par rapport aux fils longitudinaux, il pourrait être envisagé de supprimer cet élément de liage. De plus, il pourrait être envisagé de réaliser une couche interne comprenant plusieurs séries de fils longitudinaux superposés. Enfin, les tubes peuvent avoir une section autre que circulaire, par exemple avoir une forme profilée.

**Revendications**

1. Matériau tubulaire à base d'une résine renforcée par une armature textile utilisable pour la réalisation d'un cadre de bicyclette ou véhicule similaire, matériau du type comportant une pluralité de couches textiles superposées, la couche interne (12) et la couche externe (18) étant constituée par des gaines tressées bidirectionnelles, ces deux couches emprisonnant au moins une couche de fils longitudinaux (15), caractérisé par le fait :

   - que la couche interne (12) et la couche externe (18) sont constituées de tresses bidirectionnelles à base de fibres présentant une grande résistance mécanique telles que des fibres de verre, de carbone, de bore ;

   - que la couche centrale unidirectionnelle (15) est constituée par au moins une couche de fils longitudinaux (16), parallèles, comprenant au moins 10 % de fils présentant une grande résistance à la traction, les autres fils longitudinaux étant des fils de même nature que les fils constituant les tresses bidirectionnelles des couches interne (12) et externe (18).

2. Matériau tubulaire selon la revendication 1, caractérisé par le fait que les fils longitudinaux de la couche centrale sont liés entre eux par l'intermédiaire d'une tresse à base de fils fins (17) par rapport auxdits fils longitudinaux.

3. Matériau selon l'une des revendications 1 et 2, caractérisé par le fait que la couche externe (18) est recouverte d'une tresse bidirectionnelle additionnelle (19) à base de fils de verre.

4. Matériau selon l'une des revendications 1 à 3, caractérisé par le fait que la couche interne (12) et la couche externe (18) sont constituées d'une seule tresse bidirectionnelle.

5. Matériau selon l'une des revendications 1 à 3, caractérisé par le fait que les couches interne (12) et externe (18) sont formées par la superposition de plusieurs tresses bidirectionnelles (12a)-(12b), (18a)-(18b), (18c).

6. Matériau selon la revendication 5, caractérisé par le fait que l'inclinaison des fils varie d'une tresse élémentaire à l'autre, cette inclinaison étant de préférence comprise entre 30 et 55°.

7. Matériau selon l'une des revendications 1 à 6, caractérisé par le fait qu'il est cylindrique.

8. Matériau selon l'une des revendications 2 à 6, caractérisé par le fait qu'il est de forme conique, les fils de liage de la tresse intermédiaire unidirectionnelle (15) étant dans ce cas des fils à forte extensibilité.

9. Cadre de bicyclette caractérisé par le fait que le tube horizontal (1), la douille de direction (2), le tube diagonal (3) et le tube de selle (4) sont constitués d'éléments tubulaires cylindriques selon l'une des revendications 1 à 7, et que les haubans (9) et les embases (10) sont constitués d'éléments tubulaires coniques selon la revendication 8.

**Claims**

1. A tubular material based on a fabric-reinforced resin suitable for the fabrication of a bicycle frame or similar vehicle frame, said material consisting of a plurality of superimposed layers of fabric, the inside layer (12) and outside layer (18) thereof consisting of bidirectional braided sheaths, said two layers sandwiching at least one third layer (15) of longitudinal yarns, characterized by the fact :
   - said inside layer (12) and outside layer (18) consist of bidirectional braids based on high-strength fibers such as glass fibers, carbon fibers or boron fibers ;
   - and said unidirectional intermediate layer (15) consists of at least one layer of parallel, longitudinal yarns (16) at least 10 % whereof are high tensile strength yarns and the remaining yarns whereof are yarns of the same type as those making up the bidirectional braids of said inside and outside layers (12),(18).

2. A tubular material according to the claim 1, characterized by the fact that longitudinal yarns of the intermediate layer are linked together by means of a braid of comparatively finer yarns (17) than the longitudinal yarns.

3. A material according one of the claims 1 and 2, characterized by the fact that the outside layer (18) is covered by an additional bidirectional braid (19) of glass fibers.

4. A material according one of the claims 1 to 3, characterized by the fact that the inside layer (18) and the outside layer (18) consist of a single bidirectional braid.

5. A material according one of the claims 1 to 3, characterized by the fact that the inside and outside layers (12,18) are made by laying up several bidirectional braids (12a)-(12b), (18a)-(18b)-(18c).

6. A material according to the claim 5, characterized by the fact that the yarns are differently skewed from one component braid to the next, said skewing being preferably at an angle ranging from 30° to 55°.

7. A material according one of the claims 1 to 6, characterized by the fact that it is of cylindrical shape.

8. A material according one of the claims 2 to 6, characterized by the fact that it is of tapered shape, the linking yarns of the unidirectional intermediate braid (15) therein being therefor high-stretch yarns.

9. A bicycle frame characterized by the fact that the cross bar (1), the head tube (2), the downtube (3) and the seat tube (4) are made from cylindrical tubular materials according one of the claims 1 to 7 and that the seat stay (9) and the chain stay (10) members are made from conical tubular materials according to the claim 8.

**Patentansprüche**

1. Rohrförmiges Material auf Harzbasis, das durch eine textile Einlage verstärkt ist, zum Herstellen eines Rahmens für ein Fahrrad oder ein ähnliches Fahrzeug, wobei das Material eine Vielzahl an aufeinanderliegenden textilen Schichten aufweist, wobei die innenliegende Schicht (12) und die außenliegende Schicht (18) aus in zwei Richtungen laufenden Geflechtschläuchen aufgebaut sind, wobei diese beiden Schichten zumindest eine Schicht an längsverlaufenden Fäden (15) gefangen halten, dadurch gekennzeichnet,
   - daß die innenliegende Schicht (12) und die außen liegende Schicht (18) aus in zwei Richtungen laufenden Geflechten auf Basis von Fasern aufgebaut sind, die eine hohe mechanische Festigkeit aufweisen, wie beispielsweise Glasfasern, Kohlefasern, Borfasern;
   - daß die mittige, in einer Richtung laufende Schicht (15) aus zumindest einer Schicht an längsverlaufenden parallelen Fäden (16) aufgebaut ist, die zumindest 10 % an Fäden enthält, die eine hohe Zugfestigkeit aufweisen, wobei die restlichen längsverlaufenden Fäden, Fäden gleicher Natur wie diejenigen Fäden sind, die die in zwei Richtungen verlaufenden Geflechte der innenliegenden (12) und der außenliegenden Schicht (18) aufbauen.

2. Rohrförmiges Material nach Anspruch 1, dadurch gekennzeichnet, daß die längsverlaufenden Fäden der mittigen Schicht untereinander durch ein Geflecht auf Basis von gegenüber den längsverlaufenden Fäden feinen Fäden (17) verbunden sind.

3. Material nach Anspruch 1 oder 2, dadurch gekennzeichnet, daß die außenliegende Schicht (18) mit einem zusätzlichen, in zwei Richtungen laufenden Geflecht (19) auf Basis von Glasfasern bedeckt ist.

4. Material nach einem der Ansprüche 1 bis 3, dadurch gekennzeichnet, daß die innenliegende Schicht (12) und die außenliegende Schicht (18) jeweils durch ein einziges, in zwei Richtungen laufendes Geflecht aufgebaut sind.

5. Material nach einem der Ansprüche 1 bis 3, dadurch gekennzeichnet, daß die innenliegende Schicht (12) und die außenliegende Schicht (18) durch das Aufeinanderlegen von mehreren, in zwei Richtungen laufenden Geflechten (12a) - (12b), (18a) - (18b), (18c) aufgebaut sind.

6. Material nach Anspruch 5, dadurch gekennzeichnet, daß der Schräglaufwinkel der Fäden von einem Geflecht zum anderen variiert, wobei der Schräglaufwinkel vorzugsweise zwischen 30 und 55° liegt.

7. Material nach einem der Ansprüche 1 bis 6, dadurch gekennzeichnet, daß es zylindrisch ist.

8. Material nach einem der Ansprüche 2 bis 6, dadurch gekennzeichnet, daß es eine konische Form aufweist, wobei die Verbindungsfäden des zwischenliegenden, in einer Richtung verlaufenden Geflechtes (15) in diesem Fall Fäden mit großer Dehnbarkeit sind.

9. Fahrradrahmen, dadurch gekennzeichnet, daß das horizontale Rohr (1), das Lenkkopfrohr (2), das diagonale Rohr (3) und das Sitzrohr (4) aus zylindrischen rohrförmigen Elementen nach einem der Ansprüche 1 bis 7 ausgebildet sind, und daß die Hintergabelstreben (9) und die Hintergabelrohre (10) aus konischen rohrförmigen Elementen nach Anspruch 8 ausgebildet sind.

FIG.1

FIG.3

FIG.4

FIG.2